(19)

Europäisches
Patentamt
European
Patent Office
Office européen
des brevets

(11) **EP 2 566 293 A1**

(12) **EUROPEAN PATENT APPLICATION**

(43) Date of publication:
**06.03.2013 Bulletin 2013/10**

(51) Int Cl.:
**H05B 1/02** (2006.01)

(21) Application number: **11179467.3**

(22) Date of filing: **31.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Koninklijke Philips Electronics N.V.
5621 BA Eindhoven (NL)**

(72) Inventor: **De Grandis, Federico
5600 AE Eindhoven (NL)**

(74) Representative: **Damen, Daniel Martijn
Philips
Intellectual Property & Standards
P.O. Box 220
5600 AE Eindhoven (NL)**

(54) **Appliance heater malfunction detection**

(57)     An appliance heater (2) has a temperature sensor (14) to provide a sensor signal $T_{read}$. A controller (15) responsive to the sensor signal controls power supplied to the heater so as to maintain it at an operating temperature within a working temperature range for normal user operation. The controller is also operable to detect a sensor malfunction by comparing the sensor signal ($T_{read}$) with data corresponding to upper and lower limits ($T_{work-max}$, $T_{work-min}$) of the working temperature range for the normal user operation and to disable further normal user operation for the heater in the event that the temperature indicated by the sensor signal falls outside of the working temperature range.

FIG. 2

EP 2 566 293 A1

**Description**

FIELD OF THE INVENTION

This invention relates to an apparatus and method for detecting a malfunction in an appliance heater, for example an electrical heating element in a cooker.

BACKGROUND OF THE INVENTION

Hitherto, control of the temperature of an electrical heating appliance has been performed using a temperature sensor. However, if the sensor malfunctions, the heater may dangerously overheat the appliance or may cause the heater to switch off so that no heating occurs.

SUMMARY OF THE INVENTION

In one aspect the invention provides an apparatus for detecting a malfunction in an appliance heater, comprising a sensor to provide a sensor signal ($T_{read}$) as a function of the temperature of the heater, a controller responsive to the sensor signal to control power supplied to the heater so as to maintain the heater at an operating temperature within a working temperature range for the normal user operation, the controller being operable to compare the sensor signal ($T_{read}$) with data corresponding to upper and lower limits ($T_{work-max}$, $T_{work-min}$) of the working temperature range for the normal user operation and to disable normal user operation for the heater in the event that the temperature signalled by the sensor signal falls outside of the working temperature range.

Thus according to the invention, the apparatus is configured to cause the heater to be disabled for normal operation in response to a detected temperature sensor malfunction, so that the apparatus cannot be restarted until e.g. a service engineer has determined the fault. For example if the sensor has failed, it can be replaced to bring the apparatus back into operation.

In one embodiment, the controller comprises a digital processor with an associated non-volatile memory, the processor being operable to store a disable signal in the non-volatile memory when the comparison indicates that the sensor signal falls outside the upper and lower limits of the working temperature range. The processor may conveniently be configured to disable the supply of power to the heater in response to the disable signal stored in the non-volatile memory. With such an arrangement, the service engineer can re-set the data in the non-volatile memory once the apparatus has been repaired e.g. by replacement of the sensor.

The apparatus may include a display to indicate when normal user operation has been disabled by the controller, indicating that the service engineer needs to be called.

In order to ensure that the heater is only disabled when a genuine fault has occurred, the controller may be configured to disable the heater in the event that the temperature indicated by the sensor falls outside of the working temperature range for more than a given time, for example between 0.5 and 5 seconds, typically 1 second.

The invention also includes a method of detecting a malfunction in an appliance heater, comprising using a sensor to provide a sensor signal ($T_{read}$) as a function of the temperature of the heater, controlling the power to the heater in response to the sensor signal to maintain the heater at an operating temperature within a working temperature range for the normal user operation, comparing the sensor signal ($T_{read}$) with data corresponding to upper and lower limits ($T_{work-max}$, $T_{work-min}$) of the working temperature range for the normal user operation and disabling the heater for normal user operation in the event that the temperature signalled by the sensor signal falls outside of the working temperature range.

The invention further includes a computer program to be run by a processor to perform the aforesaid method.

BRIEF DESCRIPTION OF THE DRAWINGS

In order that the invention may be more fully understood an embodiment thereof will now be described by way of illustrative example with reference to the accompanying drawings in which:

    **Figure 1** is a vertical sectional view of a slow cooker;
    **Figure 2** is a schematic diagram of electrical circuitry included within the slow cooker and;
    **Figure 3** is a flow diagram of steps performed by a program controlled processor illustrated in Figure 2.

**DETAILED DESCRIPTION**

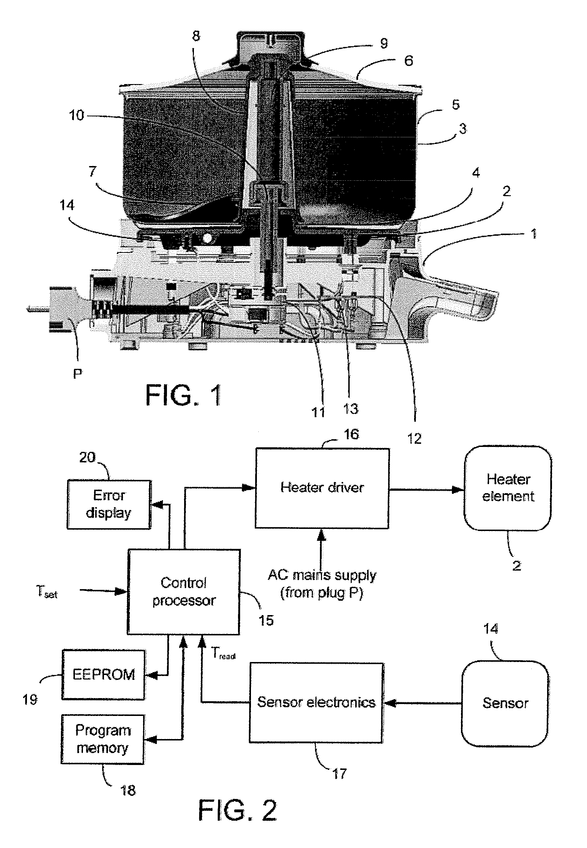

Referring to Figure 1 an electrical appliance in the form of a slow cooker comprises a housing 1 which is designed to sit on a kitchen counter and has a generally disc shaped electrical heater 2 mounted on its upper side in a horizontal configuration to receive a cooking pot 3 having a flat, disc shaped base 4, a cylindrical sidewall 5 and a removable lid 6.

A stirring blade 7 is coupled to a vertically extending axial column member 8 connected by axial coupling pieces 9, 10 to an electric stirring motor 11 mounted in the housing 1. An AC electrical supply is coupled through plug P to the motor 11 and also to the electrical heater element 2.

Control of the electrical supply to the heater 2 and motor 11 is controlled by a controller 12 mounted on a circuit board 13 within the housing 1. The controller 12 receives a temperature signal T from a heater temperature sensor 14 mounted on the heater element 2 so as to detect its working temperature.

Referring to Figure 2, the controller 12 includes a control processor 15 which provides a heater drive signal that is fed to a heater driver circuit 16. The heater driver circuit 16 feeds the AC mains supply from plug P in a duty cycle to the heater element 2 and the duty cycle is controlled as a function of the heater drive signal from the control processor 15 in order to control the temperature of the heater element 2.

The sensor 14 conveniently comprises a thermistor for example a PTC, NTC, PT100 or the like. The sensor 14 is driven by a sensor drive and control circuit 17 which derives an electrical signal T as a function of the sensed temperature of the heater element 2. The control processor 15 repeatedly samples the signal T to derive a sampled signal Tread as a function of the sensed temperature.

The control processor 15 receives a set temperature $T_{set}$, which may be set by the user to determine the desired set temperature for the heater element 2. The control processor 15 thus controls the duty cycle of the heater driver circuit 16 to maintain the sampled temperature $T_{read}$ towards equality with $T_{set}$ in a feedback loop.

The control processor 15 has an associated program memory 18 which stores programs for controlling the heater to perform different heating routines for different cooking recipes at selectable, different temperatures $T_{set}$.

The program memory 18 also includes a program for checking for malfunctions of the sensor 14. If the sensor 14 becomes damaged, the value of $T_{read}$ may go towards zero and as a result, the processor 15 will cause the heater element 2 to be driven at full power in an uncontrolled manner, which may produce scorching or overcooking. Conversely, if the sensor 14 fails in such a way that $T_{read}$ adopts a very high value, the heater element 2 may be turned off or operate at very low power so that no cooking occurs. To overcome this problem, the cooker is provided with a sensor malfunction detection program in memory 18, which is run by the processor 15 to check for malfunctions of the sensor 14. To this end, the characteristics of the sensor 14 are selected so that the normal temperature range over which it can operate to sense the temperature of heater 2 is greater than the maximum and minimum allowed working temperature for the heater. Thus, the characteristics of sensor 14 give rise to the following relationship:

$$T_{\_read\_min} < T_{\_work\_min} < T_{\_work\_max} < T_{\_read\_max} \qquad (1)$$

where:

| | |
|---|---|
| $T_{read}$ | is the current read temperature |
| $T_{\_read-min}$ | is the minimum possible read temperature |
| $T_{\_work\,min}$ | is the minimum allowed working temperature |
| $T_{\_work\,max}$ | is the maximum allowed working temperature |
| $T_{\_read-max}$ | is the maximum possible read temperature |

Thus a malfunction of sensor 14 can be detected by determining whether the value of $T_{read}$ from the sensor falls within one of two ranges defined as follows:

$$\text{Low Range: } T_{\_read\_min} \leq T_{read} \leq T_{\_work\_min} \qquad (2)$$

$$\text{High Range: } T_{\_work\_max} \leq T_{read} \leq T_{\_read\_max} \qquad (3)$$

In the event that the control processor 15 determines that the sensor temperature signal $t_{read}$ falls within the low range or high range defined by the inequalities (2) and (3) set out above, the drive signal to the heater driver 16 is disabled so that no ac mains supply is fed to the heater 2. Also, a disable signal is stored in a non-volatile memory 19, conveniently an EEPROM, so as to permanently disable normal user operation of the cooker. Also, an error message is displayed on display device 20 in response to the detected malfunction under the controller processor 15. The error message may indicate that a service engineer needs to be called.

The service engineer may then replace the sensor 14. This will clear the error display and restore the device ready for normal user operation.

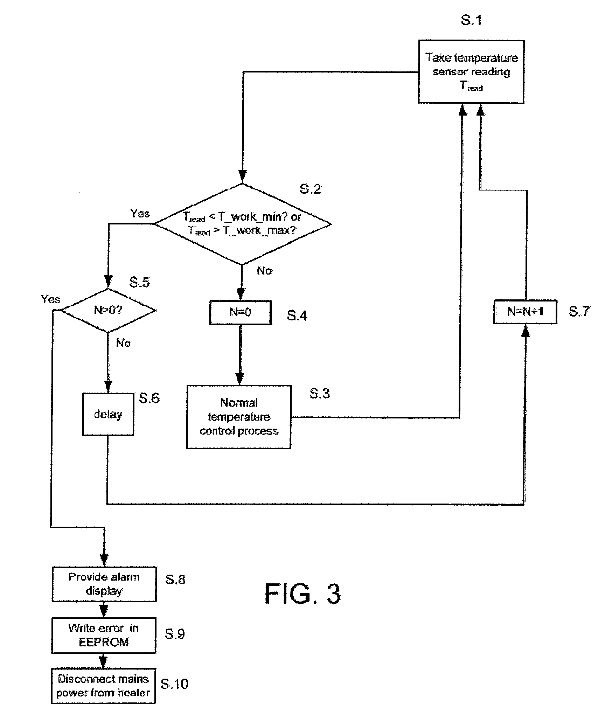

Figure 3 illustrates in more detail the process steps performed by the processor 15 under the control of the malfunction detection program held in memory 18.

Referring to Figure 3, at step S1, the processor 15 samples the temperature signal T produced on a continuous basis by sensor electronics 17 to produce a current sample of the sensed temperature $T_{read}$.

At step S2, the processor checks to see whether the current value of Tread falls within the normal working range and thus implicitly checks whether the value of Tread falls within the low or high ranges defined in equalities (2) and (3).

If the current value of Tread falls within the normal operating range i.e. not within the aforesaid low or high ranges, the process continues according to the normal temperature control process in which the drive signal provided by the control processor 15 to the heater driver 16 varies the duty cycle of AC power supplied to the heater element 2 so as to maintain the heater temperature to the value $T_{set}$. This is indicated at step S3 in Figure 3. A control parameter N is set to value zero at step S4.

If the value of the sensor temperature sample Tread falls outside of the normal working range as tested at step S2, the sensor temperature reading is tested a second time after a predetermined delay in order to ensure that the system has not been spuriously triggered to indicate a malfunction. With the current value of N=0 (previously set at step S4), the process moves through step S5 to a delay step S6 of for example between 0.5 and 5 seconds e.g. 1 second, after which the parameter N is incremented to N+1 at step S7 and the temperature T is sampled in a second occurrence at step S1. If the second sample of Tread is determined at S2 also to be outside of the normal working range, then, at step S5, it is determined that N>0 (N=1 from step S7) and so an alarm is provided on display 20 at step S8, the disable signal is written into non-volatile memory 19 at step S9 and the processor 15 commands the heater driver 16 to switch off the mains power from the heater 2 at step S 10.

Many modifications and variations of the described system are possible. For example whilst the described example of the invention relates to a slow cooker, it will be appreciated that the sensor malfunction detecting apparatus can be used for heaters in other appliances such as cookers and tumble dryers, and also appliances which use heaters that are not necessarily electrically driven e.g. a gas stove.

It will be appreciated that herein, the term "comprising" does not exclude other elements or steps and that the indefinite article "a" or "an" does not exclude a plurality. A single processor may fulfill the functions of several items recited in the claims. The mere fact that certain measures are recited in mutually different dependent claims does not indicate that a combination of these measures cannot be used to an advantage. Any reference signs in the claims should not be construed as limiting the scope of the claims.

Although claims have been formulated in this application to particular combinations of features, it should be understood that the scope of the disclosure of the present invention also includes any novel features or any novel combinations of features disclosed herein either explicitly or implicitly or any generalisation thereof, whether or not it relates to the same invention as presently claimed in any claim and whether or not it mitigates any or all of the same technical problems as does the parent invention. The applicants hereby give notice that new claims may be formulated to such features and/or combinations of features during the prosecution of the present application or of any further application derived therefrom.

Other modifications and variations falling within the scope of the claims hereinafter will be evident to those skilled in the art.

**Claims**

1. Apparatus for detecting a malfunction in an appliance heater, comprising a sensor (14) to provide a sensor signal ($T_{read}$) as a function of the temperature of the heater, a controller (15) responsive to the sensor signal to control power supplied to the heater so as to maintain the heater at an operating temperature within a working temperature range for the normal user operation, the controller being operable to compare the sensor signal ($T_{read}$) with data corresponding to upper and lower limits ($T_{work-max}$, $T_{work-min}$) of the working temperature range for the normal user operation and to disable normal user operation for the heater in the event that the temperature signalled by the sensor signal falls outside of the working temperature range for normal user operation.

2. Apparatus according to claim 1 wherein the controller is operable to disable the further normal user operation for the heater by disabling the power for the heater.

3. Apparatus according to claim 1 or 2 wherein the controller comprises a digital processor (15) with an associated non-volatile memory (19), the processor being operable to store a disable signal in the non-volatile memory when said comparison indicates that the sensor signal falls outside of the upper and lower limits ($T_{work-max}$, $T_{work\ min}$) of the working temperature range, the processor being configured to disable the supply of power to the heater in response to the disable signal stored in the non-volatile memory.

4. Apparatus according to any preceding claim including a display (20) to indicate when further normal user operation has been disabled by the controller.

5. Apparatus according to any preceding claim wherein the controller is configured to disable the heater in the event that the temperature indicated by the sensor signal falls outside of the working temperature range for more than a given time.

6. Apparatus according to claim 5 wherein the given time is between 0.5 and 5 seconds.

7. Apparatus according to any preceding claim and including the heater (2).

8. Apparatus according to claim 7 wherein the heater (2) is an electrical heater and including a driver (16) to vary the duty cycle of a.c. power supplied to the electrical heater, the controller is configured to control the driver to control the temperature of the heater.

9. Apparatus according to claim 8 wherein the controller is configured to command the driver to switch off electric power to the heater to disable further normal user operation for the heater in the event that the temperature indicated by the sensor signal falls outside of the working temperature range.

10. Apparatus according to any one of claims 7 to 9 received in a housing (1) configured to receive a cooking pot (3) to be heated by the heater.

11. Apparatus according to claim 10 including a drive shaft driven by an electrical motor (11) for driving a food preparation tool (7) within the pot.

12. Apparatus according to any preceding claim wherein the sensor comprises a thermistor (14).

13. Apparatus according to any preceding claim including a user operable setting device for setting the operating temperature ($T_{set}$).

14. A method of detecting a malfunction in an appliance heater, comprising using a sensor to provide a sensor signal ($T_{read}$) as a function of the temperature of the heater, controlling the power to the heater in response to the sensor signal to maintain the heater at an operating temperature within a working temperature range for the normal user operation, comparing the sensor signal ($T_{read}$) with data corresponding to upper and lower limits ($T_{work-max}$, $T_{work-min}$) of the working temperature range for the normal user operation and disabling the heater for normal user operation in the event that the temperature signalled by the sensor signal falls outside of the working temperature range for normal user operation.

15. A computer program to be run by a processor for detecting a malfunction in an appliance heater, wherein a sensor provides a sensor to provide a sensor signal ($T_{read}$) as a function of the temperature of the heater, the program being configured to:

provide a drive signal for a heater driver to maintain the heater at an operating temperature within a working temperature range for the normal user operation,
compare the sensor signal ($T_{read}$) with data corresponding to upper and lower limits ($T_{work-max}$, $T_{work\_min}$) of the working temperature range for the normal user operation and
to disable normal user operation of the heater in the event that the temperature signalled by the sensor signal falls outside of the working temperature range for normal user operation.

FIG. 1

FIG. 2

S.1

Take temperature
sensor reading
$T_{read}$

S.2

$T_{read} < T\_work\_min?$ or
$T_{read} > T\_work\_max?$

Yes

No

S.5

N>0?

Yes

No

N=0   S.4

N=N+1   S.7

S.6

delay

S.3

Normal
temperature
control process

Provide alarm
display   S.8

FIG. 3

Write error in
EEPROM   S.9

Disconnect mains
power from heater   S.10

Europäisches
Patentamt

European
Patent Office

Office européen
des brevets

# EUROPEAN SEARCH REPORT

**Application Number**

EP 11 17 9467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/077368 A1 (ZAK ROBERT L [US] ET AL) 14 April 2005 (2005-04-14) * paragraphs [0061] - [0065]; figures 1,2,5 * | 1,2,4,7, 14,15 | INV. H05B1/02 |
| X | US 4 639 578 A (PAYNE THOMAS R [US]) 27 January 1987 (1987-01-27) * column 8, line 61 - column 9, line 49 * | 1,2,4,7, 14,15 | |
| A | WO 2008/089412 A1 (AUGUSTINE BIOMEDICAL AND DESIG [US]; DEIBEL RUDOLPH A [US]; ENTENMAN S) 24 July 2008 (2008-07-24) * page 18, line 27 - page 19, line 5; figure 1 * | 1-15 | |
| A | DE 103 04 398 A1 (LAING OLIVER [DE]; LAING KARSTEN [DE]; LAING BIRGER [DE]) 19 August 2004 (2004-08-19) * paragraph [0099]; figure 1 * | 1-15 | |

|  |  |
|---|---|
| | TECHNICAL FIELDS SEARCHED (IPC) |
| | H05B |

The present search report has been drawn up for all claims

| Place of search | Date of completion of the search | Examiner |
|---|---|---|
| Munich | 27 January 2012 | Gea Haupt, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 566 293 A1

**ANNEX TO THE EUROPEAN SEARCH REPORT
ON EUROPEAN PATENT APPLICATION NO.**                    EP 11 17 9467

This annex lists the patent family members relating to the patent documents cited in  the above-mentioned European search report.
The members are as contained in the European Patent Office EDP file on
The European Patent Office is in no way liable for these particulars which are merely given for the purpose of information.

27-01-2012

| Patent document cited in search report | | Publication date | Patent family member(s) | | Publication date |
|---|---|---|---|---|---|
| US 2005077368 | A1 | 14-04-2005 | NONE | | |
| US 4639578 | A | 27-01-1987 | NONE | | |
| WO 2008089412 | A1 | 24-07-2008 | US | 2008173629 A1 | 24-07-2008 |
| | | | WO | 2008089412 A1 | 24-07-2008 |
| DE 10304398 | A1 | 19-08-2004 | DE | 10304398 A1 | 19-08-2004 |
| | | | US | 2005141889 A1 | 30-06-2005 |

EPO FORM P0459

For more details about this annex : see Official Journal of the European Patent Office, No. 12/82